# EUROPEAN PATENT APPLICATION

(11) **EP 4 543 050 A1**
(43) Date of publication of application: **23.04.2025**
(21) Application number: 23830141.0
(22) Date of filing: 25.06.2023
(51) Int. Cl.: H04W 4/00

(54) **SATELLITE SYSTEM END STATION GROUPING METHOD, CONTROLLER, SATELLITE SYSTEM, AND STORAGE MEDIUM**

(30) Priority: 01.07.2022 CN 202210767619
(71) Applicant: ZTE Corporation, Shenzhen, Guangdong 518057 (CN)
(72) Inventor: WEI, Yixuan, Shenzhen, Guangdong 518057 (CN); LIU, Qiaowen, Shenzhen, Guangdong 518057 (CN)
(74) Representative: Savi, Massimiliano
(86) International application number: PCT/CN2023/102143
(87) International publication number: WO 2024/001963

(57) **Abstract**

The present application discloses a satellite system end station grouping method, a controller, a satellite system, and a computer storage medium. The satellite system end station grouping method comprises: acquiring control information parameters of multiple end stations (S210), the control information parameters comprising control information reporting probabilities; obtaining metric values of the multiple end stations according to the control information parameters (S220); obtaining an upper limit metric value according to the metric values of the multiple end stations and a preset group number N (S230); and grouping the multiple end stations according to a preset grouping principle and the upper limit metric value to obtain N end station groups (S240), wherein the weight of each end station is quantified by using different metric values, and the metric values of the groups are averaged in a low-complexity grouping manner.

## Description

### CROSS-REFERENCE TO RELATED APPLICATION

This application is filed on the basis of Chinese patent application No. 202210767619.X filed July 1, 2022, and claims priority to the Chinese patent application, the entire contents of which are incorporated herein by reference.

### TECHNICAL FIELD

The present disclosure relates to the technical field of satellite communication, and in particular to a method for grouping end stations in a satellite system, a controller, a satellite system, and a storage medium.

### BACKGROUND

In the process of satellite communication, a master station acquires control information reported by end stations, and then centrally processes and further schedules resources. When there are a large number of end stations, the end stations are grouped, and a dedicated control channel divided into slots is used to report the control information, to reduce the number of end stations contending in one control channel slot to obtain a small collision probability and small delay.

However, in conventional communication technologies, the end stations using the control channel divided into slots are grouped randomly. After the number of groups is determined, a corresponding number of end stations are randomly allocated to each end station group. In the subsequent communication process, end stations in an end station group send control information only in the slots of the control channel corresponding to the end station group. However, there is contention between the end stations in the same group when sending control information, and there is a high collision probability during reporting of control information. This leads to a large system scheduling delay and small reporting capacity in the communication process, affecting the communication quality.

### SUMMARY

Embodiments of the present disclosure provide a method for grouping end stations in a satellite system, a controller, a satellite system, and a computer storage medium.

In accordance with a first aspect of the present disclosure, an embodiment provides a method for grouping end stations in a satellite system, including: acquiring a control information parameter of each of a plurality of end stations, where the control information parameter includes a control information reporting probability; obtaining a metric value of each of the plurality of end stations according to the control information parameter; obtaining an upper limit metric value according to the metric values of the plurality of end stations and a preset group number N; and grouping the plurality of end stations according to a preset grouping principle and the upper limit metric value to obtain N end station groups.

In accordance with a second aspect of the present disclosure, an embodiment provides an end station grouping controller, including a memory, a processor, and a computer program stored in the memory and executable by the processor, where the computer program, when executed by the processor, causes the processor to implement the method for grouping end stations in a satellite system in accordance with any embodiment of the first aspect.

In accordance with a third aspect of the present disclosure, an embodiment provides a satellite system, including the end station grouping controller in accordance with any embodiment of the second aspect.

In accordance with a fourth aspect of the present disclosure, an embodiment provides a computer-readable storage medium, storing a computer-executable instruction which, when executed by a processor, causes the processor to implement the method for grouping end stations in a satellite system in accordance with any embodiment of the first aspect.

### BRIEF DESCRIPTION OF DRAWINGS

FIG. 1 is a schematic structural diagram of a satellite communication system according to an embodiment of the present disclosure;
FIG. 2 is a flowchart of a method for grouping end stations in a satellite system according to another embodiment of the present disclosure;
FIG. 3 is a flowchart of a method for acquiring metric values in a method for grouping end stations in a satellite system according to another embodiment of the present disclosure;
FIG. 4 is a flowchart of another method for acquiring metric values in a method for grouping end stations in a satellite system according to another embodiment of the present disclosure;
FIG. 5 is a flowchart of a method for setting a weight coefficient and acquiring metric values in a method for grouping end stations in a satellite system according to another embodiment of the present disclosure;
FIG. 6 is a flowchart of a method corresponding to S-shaped grouping in a method for grouping end stations according to another embodiment of the present disclosure;
FIG. 7 is a schematic diagram of S-shaped grouping in a method for grouping end stations according to another embodiment of the present disclosure;
FIG. 8 is a flowchart of a method corresponding to segment-based grouping in a method for grouping end stations according to another embodiment of the present disclosure;
FIG. 9 is a flowchart of a method for grouping end stations according to another embodiment of the present disclosure;
FIG. 10 is a curve of performance according to another embodiment of the present disclosure; and
FIG. 11 is a structural diagram of an end station grouping controller according to another embodiment of the present disclosure.

List of reference numerals: 1. master station; 2. satellite; 3. end station.

### DETAILED DESCRIPTION

To make the objectives, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In some embodiments, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the process of satellite communication, a master station acquires control information reported by end stations, and then centrally processes and further schedules resources. When there are a large number of end stations, the end stations using a control channel divided into slots are grouped randomly. After the number of groups is determined, the number of end stations in each group can be determined, and a corresponding number of end stations are randomly allocated to each end station group. In the subsequent communication process, end stations in an end station group send control information only in the slots of the control channel corresponding to the end station group. However, there is contention between the end stations in the same group, and there is a probability of collision between control information, resulting in an information loss.

To solve at least the above problems, the present disclosure discloses a method for grouping end stations in a satellite system, a controller, a satellite system, and a storage medium. In the method for grouping end stations in a satellite system according to the present disclosure, a control information parameter of each of a plurality of end stations is acquired, where the control information parameter includes a control information reporting probability; a metric value of each of the plurality of end stations is obtained according to the control information parameter; an upper limit metric value is obtained according to the metric values of the plurality of end stations and a preset group number N; and the plurality of end stations are grouped according to a preset grouping principle and the upper limit metric value to obtain N end station groups. Weights of the end stations are quantified by using different metric values, and the end stations are grouped into end station groups in a low-complexity manner such that metric values of the end station groups are balanced. As such, the collision probability of control information is effectively reduced, thereby improving the success rate of control information reporting and increasing the amount of data that can be reported.

The embodiments of the present disclosure will be further described in detail below with reference to the accompanying drawings.

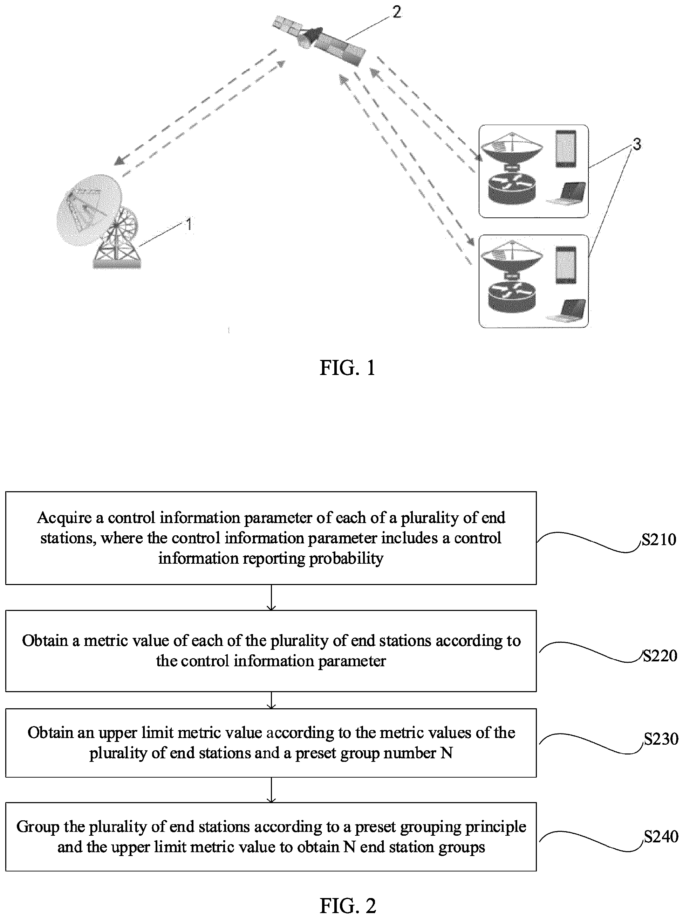

FIG. 1 is a schematic structural diagram of a satellite communication system according to an embodiment of the present disclosure.

In some embodiments, as shown in FIG. 1, the satellite communication system with a star network structure in FIG. 1 mainly includes three parts: a master station 1, a satellite 2, and end stations 3. The end stations 3 are terminal devices that need to perform satellite communication. The master station 1 is a control station for performing information processing and scheduling in satellite communication. The master station 1 functions as a control center and is an interface between the satellite system and a ground public network. A ground user can access the satellite system through a ground station to form a link. The satellite 2 functions as a relay station in air to amplify an electromagnetic wave sent by the ground station and transmit the amplified electromagnetic wave to another ground station. To facilitate amplification and transmission and reduce modulation interference, at least one transponder is generally arranged on the satellite, and an operating band is allocated for each transponder. The end stations 3 include various user terminal devices, such as mobile phones, notebook computers, etc.

In some embodiments, in the satellite communication system, communication between the end stations 3 is centrally processed and forwarded at the master station 1 through the satellite 2. The master station 1 controls all end stations 3 in a cell, and the end stations 3 are interconnected via two hops. In addition, an uplink for data transmission is divided into a plurality of slots. The master station 1 allocates uplink resources to the end stations 3 in each scheduling period according to transmission and reporting statuses of the end stations 3. The end station 3 can report control information only when scheduled by the master station 1, or can report control information on a dedicated channel.

In some embodiments, in the satellite 2 communication system, a plurality of end stations 3 connect to the master station 1 through the satellite 2 for communication. The master station 1 centrally processes and further schedules resources according to content of control information reported by the end stations 3, and allocates resources for each end station 3 in an uplink frame. To improve the reporting efficiency, the control information of the end stations 3 is reported using a control channel divided into slots, i.e., a dedicated part of channel resources is reserved and divided into a plurality of slots (e.g., in time domain and frequency domain). All the end stations 3 are also divided into a corresponding number of end station groups. One end station group may include a plurality of end stations 3. Each of the end station groups corresponds to a respective one of the control channel slots. End stations in an end station group can send control information only in the control channel slot corresponding to the end station group.

FIG. 2 is a flowchart of a method for grouping end stations in a satellite system according to another embodiment of the present disclosure. As shown in FIG. 2, the method for grouping end stations in a satellite system at least includes the following steps S210 to S240.

At S210, a control information parameter of each of a plurality of end stations is acquired, where the control information parameter includes a control information reporting probability.

In some embodiments, in the satellite communication system, the control information is used by an end station to request a master station to schedule or authorize a resource, and one master station connects to a plurality of end stations through the satellite for communication. The master station centrally processes and further schedules resources according to content of control information reported by the end stations, and at the same time, allocates resource for each end station in an uplink frame. Communication between the end stations is not directly completed. Instead, a source end station first transmits information to the master station through the satellite, and then the master station transmits the information to a destination end station through the satellite. Since all the end stations will transmit data to the master station, orderly uploading of the data to avoid conflicts is of great importance, and the end stations need to be grouped. In the present disclosure, a plurality of end stations are grouped according to control information parameters of the end stations, where the control information parameter includes a control information reporting probability of the end station corresponding to control information and a Buffer Status Report (BSR) size in the control information. As such, the collision probability of control information is effectively reduced, thereby improving the success rate of control information reporting and increasing the amount of data that can be reported.

In some embodiments, all end stations in the same end station group share the same control channel slot resource, and have a contention relationship with each other. If two or more end stations in the group report control information at the same time, the control information will collide, resulting in an information loss. In the process of the end station reporting the control information, BSR size information to be uploaded is reported in the form of an absolute value, and the reporting is determined to be successful as long as the last reporting is successful. As such, the impact of an information reporting collision on the reporting capacity is reduced. However, the information reporting collision still affects the delay of reporting, resulting in the untimely reporting of the control information. Therefore, in the embodiment of the present disclosure, the metric value is used to quantify the reporting status of the end station, and an end station grouping policy is designed according to the metric values, which can significantly reduce the overall control information collision probability, optimize the system scheduling delay, and improve the communication reliability.

At S220, a metric value of each of the plurality of end stations is obtained according to the control information parameter.

In some embodiments, the metric value is data that quantitatively describes an access status of the end station, and is used for reflecting a control information reporting status of the end station, e.g., a control information reporting probability, a BSR size to be reported in the control information, or other information related to the reporting or reporting content. The specific calculation formula may be set manually. A larger metric value of the end station indicates greater importance of the control information of the end station, indicating that the control information needs to be reported more securely and needs to occupy more reporting resources.

In some embodiments, the control information reporting probability is a probability that the end station sends control information to the master station to request a resource within a period of time, which is calculated according to historical data before grouping is performed in the system. The control information reporting probability is proportional to a usage status of the end station, so the control information reporting probability can be used as the control information parameter to determine the metric value of the end station.

In some embodiments, the BSR size is sent by the end station to the master station, and is used to inform the master station how much data the end station needs to send in an uplink buffer. After a terminal device establishes a connection to an access node, the terminal device needs to have an uplink resource in order to send uplink data to the access node. If the terminal device does not have an uplink resource, the terminal device needs to request an uplink resource from the access node first. In the process of requesting for an uplink resource from the access node, the terminal device needs to report a BSR to the access node, such that the access node schedules an appropriate uplink resource for the terminal device.

At S230, an upper limit metric value is obtained according to the metric values of the plurality of end stations and a preset group number N.

In some embodiments, obtaining an upper limit metric value according to the metric values of the plurality of end stations and a preset group number N includes: obtaining a total metric value from the metric values of the plurality of the end stations; and obtaining the upper limit metric value according to the total metric value and the preset group number N. The total metric value is divided by the preset group number to obtain the upper limit metric value, and then the plurality of end stations are grouped according to a preset grouping principle and the upper limit metric value to obtain N end station groups. In this way, metric values of the end station groups are balanced as much as possible. As such, the collision probability of control information is effectively reduced, thereby improving the success rate of control information reporting and increasing the amount of data that can be reported.

At S240, the plurality of end stations are grouped according to a preset grouping principle and the upper limit metric value to obtain N end station groups.

In some embodiments, for the method of grouping end stations based on a dedicated control channel in a satellite communication system in the present disclosure, the metric value is used to quantify the reporting status of each end station. A control information parameter of each of a plurality of end stations is acquired, where the control information parameter includes a control information reporting probability; a metric value of each of the plurality of end stations is obtained according to the control information parameter; an upper limit metric value is obtained according to the metric values of the plurality of end stations and a preset group number; and the plurality of end stations are grouped according to a preset grouping principle and the upper limit metric value. As such, each end station group occupies the same control channel slot, and resources can be more reasonably allocated. In addition, control information is reported, thereby improving the fairness of system scheduling, and solving the problem that because reporting statuses of different end stations, such as reporting probabilities, BSR sizes, etc., are not considered in random grouping, the grouping result is uncontrollable, which leads to unsatisfactory reporting fairness and large differences in reporting delay and collision probability among different end stations, resulting in a low overall reporting capacity and that some end stations cannot successfully perform reporting for a long period of time and therefore cannot be scheduled, consequently resulting in a large system scheduling delay and a small reporting capacity in the communication process and affecting the communication quality. Therefore, the overall control information collision probability can be significantly reduced, the system scheduling delay can be optimized, and a large reporting capacity of the system can be obtained, thereby improving the communication quality.

In some embodiments, the preset grouping principle is used for ensuring that the metric value of each end station group reaches but does not exceed the upper limit metric value as much as possible, to ensure the relative fairness among the end stations. The metric value of the end station group is the sum of the metric values of the end stations in the group. The upper limit metric value of the end station group is obtained by dividing the sum of the metric values of all the end stations by the number of groups. Grouping modes that follow the preset grouping principle include, but not limited to, an S-shaped grouping mode and a segment-based grouping mode.

In some embodiments, the grouping mode used for grouping the end stations in the present disclosure is the S-shaped grouping mode, the segment-based grouping mode, or other low-complexity grouping modes, which can reduce the complexity of grouping the end stations in the satellite system, and effectively improve the efficiency of grouping the end stations in the low satellite system.

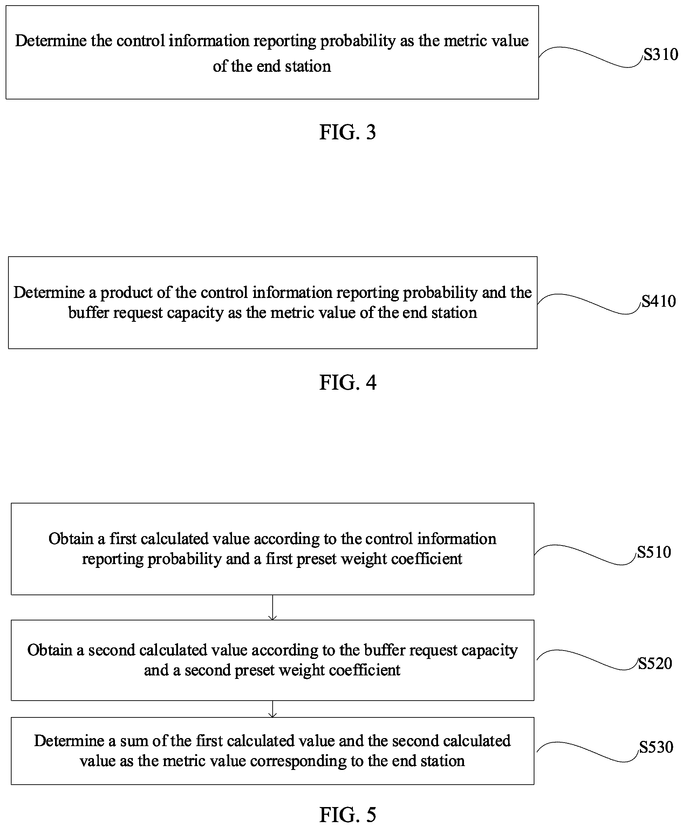

FIG. 3 is a flowchart of a method for grouping end stations in a satellite system according to another embodiment of the present disclosure. As shown in FIG. 3, the method for grouping end stations in a satellite system at least includes a following step S310.

At S310, the control information reporting probability is determined as the metric value of the end station.

In some embodiments, obtaining a metric value of each of the plurality of end stations according to the control information parameter includes: determining the control information reporting probability as the metric value of the end station. The control information reporting probability is a probability that the end station sends control information to the master station to request a resource within a period of time, which is calculated according to historical data before grouping is performed in the system. The control information reporting probability is proportional to a usage status of the end station, so the control information reporting probability can represent a weight of usage of the end station and can be used as the control information parameter to determine the metric value of the end station.

FIG. 4 is a flowchart of a method for grouping end stations in a satellite system according to another embodiment of the present disclosure. As shown in FIG. 4, the method for grouping end stations in a satellite system at least includes a following step S410.

At S410, a product of the control information reporting probability and the buffer request capacity is determined as the metric value of the end station.

In some embodiments, the buffer request capacity represents a BSR size to be reported in the control information. The BSR size represents a specific value of a resource that the end station requests the master station to schedule or authorize. A larger BSR size indicates higher occupancy of the channel by the end station when communicating with the master station. Therefore, the buffer request capacity is proportional to the usage status of the end station, and can represent a weight of usage of the end station. By determining the product of the control information reporting probability and the buffer request capacity as the metric value of the end station, the weight of each end station can be better quantified. In addition, through the grouping, metric values of the end station groups are balanced as much as possible. As such, the collision probability of control information can be effectively reduced, thereby improving the success rate of control information reporting and increasing the amount of data that can be reported.

FIG. 5 is a flowchart of a method for grouping end stations in a satellite system according to another embodiment of the present disclosure. As shown in FIG. 5, the method for grouping end stations in a satellite system at least includes the following steps S510 to S530.

At S510, a first calculated value is obtained according to the control information reporting probability and a first preset weight coefficient.

At S520, a second calculated value is obtained according to the buffer request capacity and a second preset weight coefficient.

At S530, a sum of the first calculated value and the second calculated value is determined as the metric value corresponding to the end station.

In some embodiments, a first calculated value is obtained according to the control information reporting probability and a first preset weight coefficient, a second calculated value is obtained according to the buffer request capacity and a second preset weight coefficient, and a sum of the first calculated value and the second calculated value is determined as the metric value corresponding to the end station. The proportions of the impact of the BSR reporting probability and the impact of the BSR size on the metric value of the end station can be adjusted according to the preset weight coefficients, to better quantify the weight of each end station. The weight coefficients may be obtained according to historical data or may be set by those having ordinary skills in the art, and specific values of the weight coefficients do not constitute a limitation on the present disclosure.

In some embodiments, after a plurality of buffer request capacities corresponding to the end stations are acquired, the plurality of buffer request capacities corresponding to the end stations are normalized to obtain normalized buffer request capacities, to facilitate calculation.

In some embodiments, after a plurality of metric values corresponding to the end stations are acquired, the plurality of metric values corresponding to the end stations are normalized according to a maximum value to obtain normalized metric values. As such, the weight of each end station can be better quantified, to facilitate subsequent grouping.

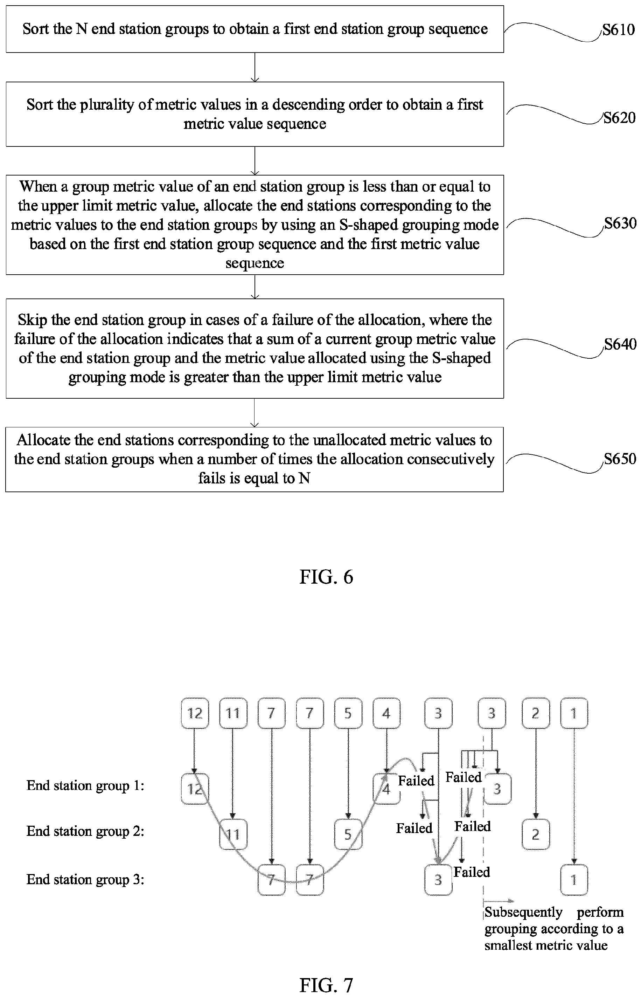

FIG. 6 is a flowchart of a method for grouping end stations in a satellite system according to another embodiment of the present disclosure. As shown in FIG. 6, the method for grouping end stations in a satellite system at least includes the following steps S610 to S650.

At S610, the N end station groups are sorted to obtain a first end station group sequence.

At S620, the plurality of metric values are sorted in a descending order to obtain a first metric value sequence.

At S630, when a group metric value of an end station group is less than or equal to the upper limit metric value, the end stations corresponding to the metric values are allocated to the end station group by using an S-shaped grouping mode based on the first end station group sequence and the first metric value sequence.

At S640, the end station group is skipped in case of a failure of the allocation, where the failure of the allocation indicates that a sum of a current group metric value of the end station group and the metric value allocated using the S-shaped grouping mode is greater than the upper limit metric value.

At S650, the end stations corresponding to the unallocated metric values are allocated to the end station groups when a number of times the allocation consecutively fails is equal to N.

In some embodiments, when the number of times the allocation consecutively fails is equal to the preset group number, the end stations corresponding to the unallocated metric values are allocated to the end station groups. Allocating the end stations corresponding to the unallocated metric values to the end station groups includes, but not limited to: randomly allocating the end stations corresponding to the unallocated metric values to the end station groups; evenly allocating the end stations corresponding to the unallocated metric values to the end station groups; or sorting current group metric values of the plurality of end station groups in an ascending order to obtain a second end station group sequence, and sequentially allocating the end stations corresponding to the unallocated metric values to the end station groups according to the second end station group sequence.

In some embodiments, when the number of times the allocation consecutively fails is equal to the preset group number, the end stations corresponding to the unallocated metric values are randomly or evenly allocated to the end station groups, such that the grouping of the end stations can be implemented more efficiently; and current group metric values of the plurality of end station groups are sorted in an ascending order to obtain a second end station group sequence, and the end stations corresponding to the unallocated metric values are sequentially allocated to the end station groups according to the second end station group sequence, such that the metric values of the end station groups are more balanced. As such, the collision probability of control information is more effectively reduced, thereby improving the success rate of control information reporting and increasing the amount of data that can be reported.

S-shaped grouping means that the end station with the largest metric value is allocated to a current end station group, the end station with the second largest metric value is allocated to a next end station group, ..., and after the corresponding end station is allocated to an end station group N, the allocation proceeds backward from the end station group N, showing an S-shape as a whole.

In some embodiments, the product of the control information reporting probability and the buffer request capacity is determined as the metric value of the end station, the value of N is 3, and a specific process of grouping 10 end stations according to the preset grouping principle and the upper limit metric value to obtain three end station groups is as follows.

The metric values of the end stations are shown in Table (1). The upper limit metric value of the end station group is calculated to be 18.33.

**Table (1) Metric values of end stations**

| End station No. | Reporting probability | Reporting BSR | Metric value |
|---|---|---|---|
| 1 | 0.0217 | 230 | 5 |
| 2 | 0.0333 | 30 | 1 |
| 3 | 0.0231 | 130 | 3 |
| 4 | 0.0710 | 155 | 11 |
| 5 | 0.0455 | 65 | 3 |
| 6 | 0.0462 | 45 | 2 |
| 7 | 0.0400 | 300 | 12 |
| 8 | 0.0280 | 250 | 7 |
| 9 | 0.0467 | 150 | 7 |
| 10 | 0.0276 | 145 | 4 |

The metric values are sorted in descending order, as shown in Table (2).

**Table (2) End station metric value sequence**

| | | | | | | | | | | |
|---|---|---|---|---|---|---|---|---|---|---|
| Metric value | 12 | 11 | 7 | 7 | 5 | 4 | 3 | 3 | 2 | 1 |
| End station No. | 7 | 4 | 8 | 9 | 1 | 10 | 3 | 5 | 6 | 2 |

Referring to FIG. 7, when a group metric value of an end station group is less than or equal to the upper limit metric value, the end stations corresponding to the metric values are allocated to the respective end station groups by using the S-shaped grouping mode based on the first end station group sequence and the first metric value sequence. When the allocation fails, the end station group is skipped, where the failure of the allocation indicates that a sum of a current group metric value of the end station group and the metric value allocated using the S-shaped grouping mode is greater than the upper limit metric value. When the number of times the allocation consecutively fails is equal to the preset group number, current group metric values of the plurality of end station groups are sorted in an ascending order to obtain a second end station group sequence, and the end stations corresponding to the unallocated metric values are allocated to the end station groups according to the second end station group sequence and the first metric value sequence. S-shaped grouping is performed first. End stations respectively with metric values of 12, 11, and 7 are sequentially allocated to end station groups 1, 2, and 3. Then, end stations respectively with metric values of 7, 5, and 4 are sequentially allocated to the end station groups 3, 2, and 1. Then, an attempt is made to add an end station with a metric value of 3 to the end station groups 1 and 2. Because the addition of the end station with the metric value of 3 will cause the group metric values of the end station groups 1 and 2 to exceed the upper limit metric value, the attempt fails. In this case, an attempt is made to allocate the end station with the metric value of 3 to the end station group 3. When three consecutive attempts of allocating the end station with the metric value of 3 fail, the grouping is performed according to a smallest metric value, and a grouping result shown in Table (3) is obtained.

**Table (3) Grouping result**

| End station group No. | End stations in the end station group | Group metric value |
|---|---|---|
| 1 | End station 7, end station 10, end station 5 | 19 |
| 2 | End station 4, end station 1, end station 6 | 18 |
| 3 | End station 8, end station 9, end station 3, end station 2 | 18 |

To sum up, the metric value is used to quantify the reporting status of each end station, and a low-complexity end station grouping policy is designed, to optimize different system performance to the greatest extent and make the metric values of the end station groups as balanced as possible. End stations in the same group occupy the same control channel slot. When upper-layer control information arrives, the control information is reported in the corresponding control channel slot. As such, the fairness of system scheduling is improved. Therefore, the overall control information collision probability can be significantly reduced, the system scheduling delay can be optimized, and a large reporting capacity of the system can be obtained, thereby improving the communication quality.

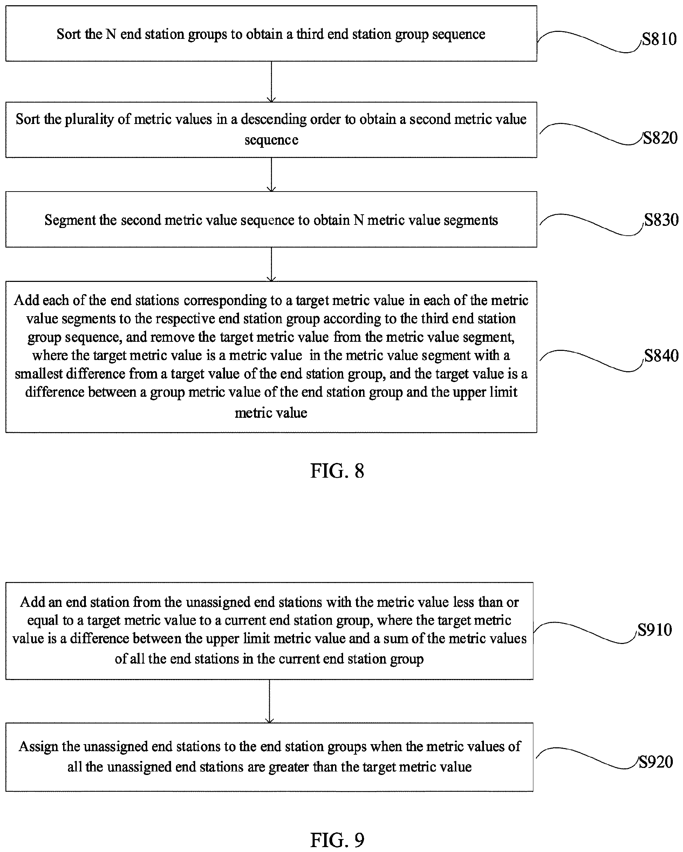

FIG. 8 is a flowchart of a method for grouping end stations in a satellite system according to another embodiment of the present disclosure. As shown in FIG. 8, the method for grouping end stations in a satellite system at least includes the following steps S810 to S840.

At S810, the N end station groups are sorted to obtain a third end station group sequence.

At S820, the plurality of metric values are sorted in a descending order to obtain a second metric value sequence.

At S830, the second metric value sequence is segmented to obtain N metric value segments.

At S840, each of the end stations corresponding to a target metric value in each of the metric value segments is added to the respective end station group according to the third end station group sequence, and the target metric value is removed from the metric value segment, where the target metric value is a metric value in the metric value segment with a smallest difference from a target value of the end station group , and the target value is a difference between a group metric value of the end station group and the upper limit metric value.

In some embodiments, segment-based grouping is performed, i.e., each of the end stations corresponding to a target metric value in each of the metric value segments is added to the respective end station group according to the third end station group sequence, and the target metric value is removed from the metric value segment. The target metric value is a metric value with a smallest difference from a target value of the end station group in the metric value segment, and the target value is a difference between a group metric value of the end station group and the upper limit metric value. Through the segment-based grouping, the grouping of the end stations can be implemented with lower complexity, thereby improving the grouping efficiency.

FIG. 9 is a flowchart of a method for grouping end stations in a satellite system according to another embodiment of the present disclosure. As shown in FIG. 9, the method for grouping end stations in a satellite system at least includes the following steps S910 to S920.

At S910, an end station from the unassigned end stations with the metric value less than or equal to a target metric value is added to a current end station group, where the target metric value is a difference between the upper limit metric value and a sum of the metric values of all the end stations in the current end station group.

At S920, the unassigned end stations are assigned to the end station groups when the metric values of all the unassigned end stations are greater than the target metric value.

In some embodiments, an allocation method used in S910 includes, but is not limited to: adding the end station with a largest metric value among the unassigned end stations whose metric values are less than or equal to the target metric value to the current end station group; or adding any end station with the metric value less than or equal to the target metric value among the unassigned end stations to an end station group. The allocation method may be adjusted by those having ordinary skills in the art according to an actual situation. The specific allocation method does not constitute a limitation on the present disclosure.

It should be noted that in the allocation process of S910, the allocation may be performed on a per-end station group basis, and when no more end station can be allocated to the current end station group by the allocation method of S910, the allocation proceeds to the next end station group; or the end station groups are sorted according to the allocation method used in S910, and one end station is allocated to the end station group according to the sorting order each time, until no more end station can be allocated by the allocation method of S910. The allocation method may be adjusted by those having ordinary skills in the art according to an actual situation. The specific allocation method does not constitute a limitation on the present disclosure.

In some embodiments, after the allocation in S910 in the above embodiment, the metric values of the remaining unallocated end stations are all greater than the target metric value, indicating that if any one of the remaining unallocated end stations is allocated to an end station group, the current target metric value of the end station group will be exceeded. In this case, the end station with the largest metric value among the remaining unallocated end stations may be allocated to the end station group with the largest current target metric value, then a corresponding end station is allocated to another end station group with the largest current target metric value according to this allocation method, ..., until all the end stations have been allocated. Alternatively, the remaining unallocated end stations are randomly allocated to a plurality of end station groups in turn, until all the end stations have been allocated; or the unallocated end stations are randomly allocated to the end station groups; or the unallocated end stations are evenly allocated to the end station groups; or current group metric values of the plurality of end station groups are sorted in an ascending order to obtain a second end station group sequence, and the unallocated end stations are sequentially allocated to the end station groups according to the second end station group sequence. The allocation method may be adjusted by those having ordinary skills in the art according to an actual situation. The specific allocation method does not constitute a limitation on the present disclosure.

In an embodiment, in the scheme of the present disclosure, end stations are grouped based on a control channel by using a low-complexity grouping mode and the metric value that quantifies the reporting status of each end station, thereby ensuring the fairness of system scheduling. Different system performance may be optimized by determining different metric values, as shown in Table (4). Table (4) is a table of communication parameters of the satellite system corresponding to different grouping modes.

**Table (4) Comparison of system performance corresponding to different grouping modes**

| | | Random grouping | | Policy-based grouping (P_{rob}) | | Policy-based grouping (P_{rob}*BSR) | |
|---|---|---|---|---|---|---|---|
| Number of successful reports per second | | 562.5 | | 688.2 | | 619.4 | |
| Average delay (frame) | Minimum | 21.89 | 16.00 | 18.86 | 17.98 | 20.13 | 16.00 |
| | Maximum | | 41.03 | | 21.77 | | 26.35 |
| Average collision probability | Minimum | 0.44 | 0.00 | 0.33 | 0.21 | 0.40 | 0.00 |
| | Maximum | | 0.83 | | 0.42 | | 0.60 |
| Average reporting capacity | Minimum | 2572 | 122.1 | 2581 | 114.8 | 2591 | 113.4 |
| | Maximum | | 18630 | | 19000 | | 19670 |

Policy-based grouping (P_{rob}) represents a grouping mode in which the control information reporting probability is determined as the metric value of the end station. Policy-based grouping (P_{rob}*BSR) represents a grouping mode in which the product of the control information reporting probability and the buffer request capacity is determined as the metric value of the end station. As can be seen from Table (4), the method for grouping end stations in a satellite system of the present disclosure can effectively reduce the collision probability and delay of the system and improve the reporting capacity of the system.

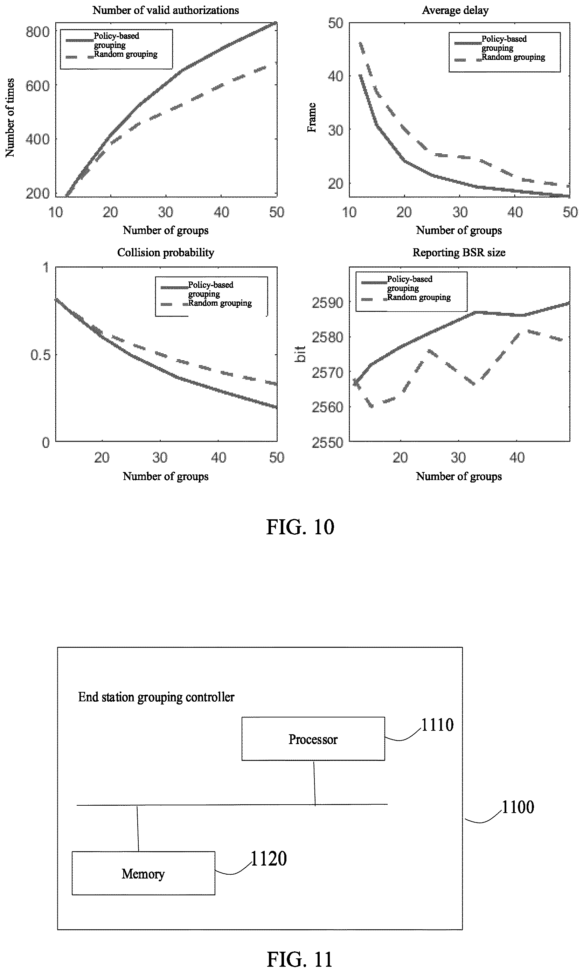

FIG. 10 shows a curve of performance versus the number of groups for the policy-based grouping (P_{rob}) of the present scheme and a random grouping policy in a related technical scheme. When the number of groups is large, the present scheme is superior to the random grouping policy in the aspects of the number of valid authorizations, average delay, collision probability, and reporting BSR size, and the reporting capacity of the present scheme is more stable. In the present scheme, weights of the end stations are quantified by using different metric values, and the end stations are grouped into end station groups in a low-complexity manner such that metric values of the end station groups are balanced. As such, the collision probability of control information is effectively reduced, thereby improving the success rate of control information reporting and increasing the amount of data that can be reported.

Referring to FIG. 11, an embodiment of the present disclosure provides an end station grouping controller 1100, including a memory 1120, a processor 1110, and a computer program stored in the memory and executable by the processor. The computer program, when executed by the processor 1110, causes the processor 1110 to implement the method for grouping end stations in any one of the above embodiments, for example, implement the method steps S210 to S240 in FIG. 2, the method step S310 in FIG. 3, the method step S410 in FIG. 4, the method steps S510 to S530 in FIG. 5, the method steps S610 to S660 in FIG. 6, the method steps S810 to S840 in FIG. 8, or the method steps S910 to S920 in FIG. 9.

In addition, an embodiment of the present disclosure provides a satellite system, including the controller described above. Because the satellite system of the embodiment of the present disclosure includes the controller of the above embodiment, and the controller of the above embodiment can execute the method for grouping end stations in a satellite system in the above embodiments, reference may be made to the specific implementations and technical effects of the method for grouping end stations in a satellite system in any one of the above embodiments for specific implementations and technical effects of the satellite system in the embodiment of the present disclosure.

In addition, an embodiment of the present disclosure provides a computer-readable storage medium, storing a computer-executable instruction which, when executed by one or more control processors, causes the one or more control processors to implement, for example, the method steps S210 to S240 in FIG. 2, the method step S310 in FIG. 3, the method step S410 in FIG. 4, the method steps S510 to S530 in FIG. 5, the method steps S610 to S660 in FIG. 6, the method steps S810 to S840 in FIG. 8, or the method steps S910 to S920 in FIG. 9.

The present disclosure has the following beneficial effects. In the method for grouping end stations in a satellite system according to the present disclosure, a control information parameter of each of a plurality of end stations is acquired, where the control information parameter includes a control information reporting probability; a metric value of each of the plurality of end stations is obtained according to the control information parameter; an upper limit metric value is obtained according to the metric values of the plurality of end stations and a preset group number N; and the plurality of end stations are grouped according to a preset grouping principle and the upper limit metric value to obtain N end station groups. Weights of the end stations are quantified by using different metric values, and the end stations are grouped into end station groups in a low-complexity manner so that metric values of the end station groups are balanced. As such, the collision probability of control information is effectively reduced, thereby improving the success rate of control information reporting and increasing the amount of data that can be reported.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A method for grouping end stations in a satellite system, comprising:
acquiring a control information parameter of each of a plurality of end stations, wherein the control information parameter comprises a control information reporting probability;
obtaining a metric value of each of the plurality of end stations according to the control information parameter;
obtaining an upper limit metric value according to the metric values of the plurality of end stations and a preset group number N; and
grouping the plurality of end stations according to a preset grouping principle and the upper limit metric value to obtain N end station groups.

2. The method for grouping end stations in a satellite system of claim 1, wherein obtaining a metric value of each of the plurality of end stations according to the control information parameter comprises:
determining the control information reporting probability as the metric value of the end station.

3. The method for grouping end stations in a satellite system of claim 1, wherein the control information parameter further comprises a buffer request capacity, and obtaining a metric value of each of the plurality of end stations according to the control information parameter comprises:
determining a product of the control information reporting probability and the buffer request capacity as the metric value of the end station.

4. The method for grouping end stations in a satellite system of claim 1, wherein the control information parameter further comprises a buffer request capacity, and obtaining a metric value of each of the plurality of end stations according to the control information parameter comprises:
obtaining a first calculated value according to the control information reporting probability and a first preset weight coefficient;
obtaining a second calculated value according to the buffer request capacity and a second preset weight coefficient; and
determining a sum of the first calculated value and the second calculated value as the metric value corresponding to the end station.

5. The method for grouping end stations in a satellite system of any one of claims 1 to 4, wherein grouping the plurality of end stations according to a preset grouping principle and the upper limit metric value to obtain N end station groups comprises:
sorting the N end station groups to obtain a first end station group sequence;
sorting the plurality of metric values in a descending order to obtain a first metric value sequence;
in response to a group metric value of an end station group being less than or equal to the upper limit metric value, allocating the end stations corresponding to the metric values to the end station group by using an S-shaped grouping mode based on the first end station group sequence and the first metric value sequence;
skipping the end station group in response to a failure of the allocation, wherein the failure of the allocation indicates that a sum of a current group metric value of the end station group and the metric value allocated using the S-shaped grouping mode is greater than the upper limit metric value; and
allocating the end stations corresponding to the unallocated metric values to the end station groups in response to a number of times the allocation consecutively fails being equal to N.

6. The method for grouping end stations in a satellite system of claim 5, wherein allocating the end stations corresponding to the unallocated metric values to the end station groups in response to a number of times the allocation consecutively fails being equal to N comprises:
sorting current group metric values of the plurality of end station groups in an ascending order to obtain a second end station group sequence; and
sequentially allocating, according to the first metric value sequence, the end stations corresponding to the unallocated metric values to the end station groups according to the second end station group sequence.

7. The method for grouping end stations in a satellite system of any one of claims 1 to 4, wherein grouping the plurality of end stations according to a preset grouping principle and the upper limit metric value to obtain N end station groups comprises:
sorting the N end station groups to obtain a third end station group sequence;
sorting the plurality of metric values in a descending order to obtain a second metric value sequence;
segmenting the second metric value sequence to obtain N metric value segments; and
adding each of the end stations corresponding to a target metric value in each of the metric value segments to the respective end station group according to the third end station group sequence, and removing the target metric value from the respective metric value segment, wherein the target metric value is a metric value in the respective metric value segment with a smallest difference from a target value of the respective end station group, and the target value is a difference between a group metric value of the respective end station group and the upper limit metric value.

8. The method for grouping end stations in a satellite system of any one of claims 1 to 4, wherein grouping the plurality of end stations according to a preset grouping principle and the upper limit metric value to obtain N end station groups comprises:
adding an end station from the unassigned end stations with the metric value less than or equal to a target metric value to a current end station group, wherein the target metric value is a difference between the upper limit metric value and a sum of the metric values of all the end stations in the current end station group; and
assigning the unassigned end stations to the end station groups in response to the metric values of all the unassigned end stations being greater than the target metric value.

9. The method for grouping end stations in a satellite system of claim 8, wherein adding an end station from the unassigned end stations with the metric value less than or equal to a target metric value to a current end station group comprises:
adding an end station with a largest metric value among the unassigned end stations whose metric values are less than or equal to the target metric value to the current end station group.

10. The method for grouping end stations in a satellite system of claim 1, wherein obtaining an upper limit metric value according to the metric values of the plurality of end stations and a preset group number N comprises:
obtaining a total metric value from the metric values of the plurality of the end stations; and
obtaining the upper limit metric value according to the total metric value and the preset group number N.

11. An end station grouping controller, comprising a memory, a processor, and a computer program stored in the memory and executable by the processor, wherein the computer program, when executed by the processor, causes the processor to perform the method for grouping end stations in a satellite system of any one of claims 1 to 10.

12. A satellite system, comprising the end station grouping controller of claim 11.

13. A computer-readable storage medium, storing a computer-executable instruction which, when executed by a processor, causes the processor to perform the method for grouping end stations in a satellite system of any one of claims 1 to 10.
